# EUROPÄISCHE PATENTANMELDUNG

(11) **EP 4 549 481 A1**
(43) Veröffentlichungstag der Anmeldung: **07.05.2025**
(21) Anmeldenummer: 23207281.9
(22) Anmeldetag: 01.11.2023
(51) Int. Cl.: C08G 18/10, C08G 18/20, C08G 18/30, C08G 18/48, C08G 18/76, C08J 9/00, C08J 9/14, C08G 101/00

(54) **POLYURETHANSCHAUM MIT FLAMMHEMMENDEN EIGENSCHAFTEN**

(71) Anmelder: Sika Technology AG, 6340 Baar (CH)
(72) Erfinder: NÜTZEL, Rainer, 9057 Weissbad (CH)
(74) Vertreter: Sika Patent Attorneys

(57) **Zusammenfassung**

Gegenstand der Erfindung ist eine vernetzbare schäumbare Polyurethanzusammensetzung geeignet zur Verwendung als Polyurethanschaum mit flammhemmenden Eigenschaften, enthaltend:
- mindestens ein Isocyanatgruppen-haltiges Prepolymer,
- mindestens ein Treibmittel,
- sowie Additive ausgewählt aus Schaumstabilisatoren, Katalysatoren, Viskositätsregulierern, Zellöffnern, Flammschutzmitteln, nicht reaktiven Polymeren, Farbstoffen oder Pigmenten, und/oder UV-Stabilisatoren,
dadurch gekennzeichnet, dass
die Polyurethanzusammensetzung, jeweils bezogen auf die gesamte Zusammensetzung,
a) zwischen 0.05 und 2.0 Gew.-% mindestens eines Zellöffners,
b) zwischen 0.5 und 5 Gew.-% mindestens eines Schaumstabilisators,
c) sowie weniger als 5 Gew.-% halogenierte und/oder Phosphatester-basierte Flammschutzmittel enthält.

Die Zusammensetzung eignet sich als Montageschaum mit verbesserten flammhemmenden Eigenschaften, benötigt dafür aber nur geringe Mengen oder überhaupt keine herkömmlichen flammhemmenden Zusätze wie halogenierte und/oder Phosphatester-basierte Flammschutzmittel.

## Beschreibung

### Technisches Gebiet

Die Erfindung betrifft vernetzbare schäumbare Polyurethanzusammensetzungen und ihre Verwendung als Montageschäume oder Schaumkleber, sowie Aerosoldosen enthaltend diese Zusammensetzungen.

### Stand der Technik

Vernetzbare schäumbare Polyurethanzusammensetzungen auf Basis von Isocyanatgruppen-haltigen Prepolymeren werden vielfach eingesetzt, beispielsweise zur Erzeugung von Montage- und Isolationsschäumen im Bauhandwerk oder in der industriellen Fertigung. Sie beruhen auf der Eigenschaft Isocyanatgruppen-haltiger Prepolymere, zu einem festen Schaum erstarren und die Bauteile isolierend miteinander verbinden oder Hohlräume dämmend auszufüllen, wenn sie mit Hilfe von Treibmitteln aus einer Druckdose aus- und in eine Fuge zwischen Bauteilen oder in einen Hohlraum eingebracht werden. Derartige Schaumzusammensetzungen zeichnen sich durch eine gute Haftung an einer Vielzahl von Untergründen aus, ohne aber auf ihre Klebstoffeigenschaften hin optimiert zu sein. Die Klebstoffeigenschaften beruhen teils auf einer einfachen Adhäsion, zudem aber auch auf der Fähigkeit der Schaumzusammensetzung, reaktiv an Untergründen anzubinden, die über aktivierte Wasserstoffatome verfügen. Dies ist bei Baustoffen mineralischen, biologischen oder synthetischen Ursprungs häufig der Fall.

Derartige Schaumzusammensetzungen sind als einkomponentige Systeme (1K) wie auch als zweikomponentige Systeme (2K) bekannt. Bei einkomponentigen Systemen erfolgt die Aushärtung mit Hilfe von in der Umgebung enthaltener Feuchtigkeit, beispielsweise Luftfeuchtigkeit, ggf. auch mit Hilfe von nachträglich zugeführtem Wasser. 2K- Systeme benötigen eine zweite Komponente, die in der Regel in Form eines separaten Vernetzers in der Druckdose enthalten ist und der Aktivierung durch den Benutzer bedarf. Die erfindungsgemässen vernetzbaren schäumbaren Polyurethanzusammensetzungen machen von diesem Prinzip Gebrauch, wobei es sich in der erster Linie um 1K-Systeme in Druckdosen handelt.

Einkomponentige Polyurethanschäume (1K Schäume) sind lange bekannt und werden hauptsächlich für das Dichten und Dämmen von Fugen im Bau und Heimwerkerbereich eingesetzt. Bei solchen Anwendungen wird das SchaumProdukt aus einer Aerosoldose appliziert (sogenannte OCF-Schäume) und zum Beispiel zum Einbau von Tür- und Fensterrahmen in Gebäuden verwendet.

Polyurethan-basierte Schaumstoffe, die im Bauwesen oder der Industrie eingesetzt werden, unterliegen in vielen Ländern bestimmten Brandschutzvorschriften. Sie müssen also eine genügende flammhemmende Eigenschaften aufweisen, und je nach Anwendung die erforderliche Normbedingung für Brandverhalten erfüllen. Bei Polyurethanschäumen ist dies beispielsweise über die Industrienorm DIN 4102 «Brandverhalten von Baustoffen und Bauteilen» bzw. auf europäischer Ebene nach DIN EN 13501 definiert und klassifiziert. Je nach Anwendung müssen die Polyurethanschäume zwingend gewisse Brandklassen nach Norm erfüllen. Zudem sind für viele Kunden sind gute flammhemmende Eigenschaften auch unter dem Gesichtspunkt der Produktions- und Lagersicherheit ein zusätzliches Argument. Daher ist es sehr wichtig, gute und sichere Brandprüfungswerte zu erzielen.

Die flammhemmende Eigenschaft, oder anders gesagt die Schwerentflammbarkeit von Polyurethanschaumstoffen, wird im Wesentlichen durch den Zusatz von Flammschutzmitteln zur chemischen Zusammensetzung erreicht. Dabei handelt es sich in der Regel um halogenierte, also bromierte oder chlorierte, Weichmacher oder Polyole, wie beispielsweise Chlorparaffine oder halogenierte Polyetherpolyole. Ebenfalls oft als Flammschutzmittel eingesetzt werden organische, teilweise auch halogenierte Phosphatester, welche wie die halogenierten Flammschutzmittel meist flüssig eingesetzt werden und dabei zusätzlich als Weichmacher oder Verdünner wirken können. Alle diese Produkte haben jedoch generell den Nachteil, dass sie umwelt- oder gesundheitsgefährdend sind und dadurch entsprechend erhöhte Arbeitssicherheits- Entsorgungs- und Kennzeichnungsanforderungen haben. Ausserdem sind sie im Vergleich zu Standardpolyolen oder -weichmachern sehr teuer. Aus diesen Gründen wird oft versucht, solche Zusätze nur minimal einzusetzen, was jedoch zu Lasten der flammhemmenden Eigenschaften geht.

Ein Beispiel einer üblichen Polyurethanschaumzusammensetzung mit anwendungsgerechten flammhemmenden Eigenschaften wird in WO 2011/113587 A2 offenbart. Dort wird gelehrt, bezogen auf die gesamte Zusammensetzung 5 bis 15 Gew.-% Trismonochlorpropylphosphat (TMCP) als flammhemmenden Weichmacher einzusetzen, sowie 4 bis 12 Gew.-% zusätzliche Flammschutzmittel, insbesondere halogenierte Polyetherpolyole, einzusetzen, um gute Flammschutzeigenschaften im Polyurethanschaum zu erhalten. Solche Mengen sind jedoch, wie oben beschrieben, nachteilig hinsichtlich der daraus resultierenden ungünstigen EHS-Eigenschaften der Formulierung.

Daher besteht ein Bedarf an vernetzbaren schäumbaren Polyurethanzusammensetzungen, welche ohne den Zusatz von üblichen Flammschutzmitteln in hohen Mengen genügende flammhemmende Eigenschaften aufweisen, um die benötigten Industrienorm-Klassifizierungen zu erreichen und gleichzeitig kostengünstig und umweltfreundlich formuliert werden können.

### Darstellung der Erfindung

Aufgabe der vorliegenden Erfindung ist es, eine neuartige, vernetzbare schäumbare Polyurethanzusammensetzung bereitzustellen, welche die Nachteile des Standes der Technik überwindet und sich zur Verwendung als Polyurethanschaum mit flammhemmenden Eigenschaften eignet und ohne oder mit nur sehr geringem Zusatz an herkömmlichen Flammschutzmitteln, insbesondere halogenierten Weichmachern oder Polyolen und organischen Phosphatestern, formuliert werden kann und dennoch die benötigten Flammschutzeigenschaften für eine erforderliche Normklassifizierung erreichen kann.

Diese Aufgabe wird mit einer vernetzbaren schäumbaren Polyurethanzusammensetzung wie in Anspruch 1 beschrieben gelöst. Durch den Einsatz von zwischen 0.05 und 2.0 Gew.-% mindestens eines Zellöffners, zwischen 0.5 und 5 Gew.-% mindestens eines Schaumstabilisators, sowie weniger als 5 Gew.-% halogenierte und/oder Phosphatester-basierte Flammschutzmittel in einer üblichen Polyurethanschaumzusammensetzung wird ein Schaumprodukt erhalten, welches genügend hohe flammhemmende Wirkung für mindestens eine Klassifizierung B2 nach DIN 4102-1 aufweist, und dabei keine Gefahrstoffkennzeichnung auf Grund EHS-kritischer herkömmlicher Flammschutzmittel benötigt. Die erfindungsgemässe vernetzbare schäumbare Polyurethanzusammensetzung kann zudem monomerarm formuliert werden und benötigt in diesen Ausführungsformen auch keine Gefahrstoffetikettierung bezüglich enthaltener Diisocyanatmonomere.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine vernetzbare schäumbare Polyurethanzusammensetzung geeignet zur Verwendung als Polyurethanschaum mit flammhemmenden Eigenschaften, enthaltend:
- mindestens ein Isocyanatgruppen-haltiges Prepolymer,
- mindestens ein Treibmittel,
- sowie Additive ausgewählt aus Schaumstabilisatoren, Katalysatoren, Viskositätsregulierern, Zellöffnern, Flammschutzmitteln, nicht reaktiven Polymeren, Farbstoffen oder Pigmenten, und/oder UV-Stabilisatoren,
dadurch gekennzeichnet, dass die Polyurethanzusammensetzung, jeweils bezogen auf die gesamte Zusammensetzung,
a) zwischen 0.05 und 2.0 Gew.-%, bevorzugt zwischen 0.06 und 1.0 Gew.-%, mindestens eines Zellöffners,
b) zwischen 0.5 und 5 Gew.-%, bevorzugt zwischen 1.0 und 3.5 Gew.-%, mindestens eines Schaumstabilisators,
c) sowie weniger als 5 Gew.-%, bevorzugt weniger als 3.5 Gew.-%, halogenierte und/oder Phosphatester-basierte Flammschutzmittel enthält.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt, insbesondere mit Tetrahydrofuran als mobiler Phase, Brechungsindex-Detektor und Auswertung ab 200 g/mol.

Mit "Poly" beginnende Substanznamen wie Polymercaptan, Polyaldehyd, Polyisocyanat oder Polyol bezeichnen Substanzen, die formal zwei oder mehr der in ihrem Namen vorkommenden funktionellen Gruppen pro Molekül enthalten.

Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "monomeres Diisocyanat" wird eine organische Verbindung mit zwei Isocyanatgruppen, die durch einen zweiwertigen Kohlenwasserstoff-Rest mit 4 bis 15 C-Atomen getrennt sind, bezeichnet.

Als "aromatisch" wird eine Isocyanatgruppe bezeichnet, welche direkt an ein aromatisches C-Atom gebunden ist. Isocyanate mit ausschliesslich aromatischen Isocyanatgruppen werden entsprechend als "aromatische Isocyanate" bezeichnet. Als "monomeres aromatisches Diisocyanat" wird ein monomeres Diisocyanat mit aromatischen Isocyanatgruppen bezeichnet.

Als "NCO-Gehalt" wird der Gehalt an Isocyanatgruppen in Gewichts-% bezeichnet. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Ein wesentlicher Bestandteil der erfindungsgemässen Zusammensetzung sind Isocyanatgruppen-haltige Prepolymere hergestellt aus der Umsetzung mindestens eines Polyols und mindestens eines Diisocyanats. Es handelt sich dabei um NCOreaktive Prepolymere, wobei diese in bevorzugten Ausführungsformen monomerarm sind. Der Begriff «monomerarm» bedeutet hier, dass die Prepolymere einen Restmonomergehalt von weniger als 0.5 Gew.-%, bezogen auf das Prepolymer, aufweisen. Die in der erfindungsgemässen Zusammensetzung enthaltenen Prepolymere sollen zudem eine geeignete Viskosität aufweisen, damit sie einerseits als Schaum zu verarbeiten sind, andererseits bevorzugt eine genügend hohe Anfangsfestigkeit zur Anwendung als Montageschaum entwickeln.

Geeignete Prepolymere können durch Reaktion von Polyolen mit Diisocyanaten hergestellt werden, wobei die Polyole bevorzugt nur einen geringen Verzweigungsgrad aufweisen. Da bei soll die Funktionalität insbesondere einzeln oder als Mischung unter 2,5 betragen, bevorzugt unter 2,3. Insbesondere sollen im Wesentlichen lineare Diole eingesetzt werden. Einwertige Alkohole sind zu vermeiden, um ein Netzwerk nach der Vernetzung zu erhalten. Die Molmasse der Polyole kann einzeln bestimmt werden, erfindungsgemäss ist es jedoch ausreichend wenn die Mischung der Polymere eine entsprechende mittlere Molmasse aufweist.

Als Polyole geeignet sind prinzipiell alle Polyole, die für Polyurethanschäume verwendet werden. Insbesondere sollen im Wesentlichen lineare Diole eingesetzt werden. Bevorzugt werden für die Herstellung der Prepolymere Polyesterpolyole und/oder Polyetherpolyole eingesetzt, insbesondere Polyetherpolyole.

Beispiele für geeignete Prepolymere sind solche auf auf Basis von Polyesterpolyolen. Diese sind durch Reaktion von Polyesterpolyolen mit einem Überschuss an Diisocyanaten herstellbar. Geeignete Polyesterpolyole sind Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignete Diole sind beispielsweise Ethylenglykol, 1,2- oder 1,3-Propandiol, 1,2- oder 1,4-Butandiol, Pentandiol, die isomeren Hexandiole, Octandiol, 1 ,4-Hydroxymethylcyclohexan, 2-Methyl-1,3-propandiol, Butantriol, Triethylenglykol, Tetraethylenglykol, Polyethylenglykol, Dipropylenglykol, Polypropylenglykol, Dibutylenglykol oder Polybutylenglykol. Es können auch aromatische Diole eingesetzt werden.

Die eingesetzten Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen oder Ethergruppen. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dinnerfettsäure oder Gemische aus zwei oder mehr davon geeignet. Als Tricarbonsäuren, die gegebenenfalls in geringen Mengen enthalten sein können, sind beispielsweise Zitronensäure oder Trimellithsäure geeignet. Alle genannten Säuren können einzeln oder als Gemische aus zwei oder mehr davon eingesetzt werden. Dem Fachmann sind solche OH-funktionelle Polyester bekannt und sie sind kommerziell erhältlich. Insbesondere geeignet sind drei oder insbesondere zwei endständige OH-Gruppen aufweisende Polyesterpolyole.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Geeignete Polyesterpolyole weisen in einer Ausführungsform eine mittleres Molekulargewicht Mₙ von 150 bis 5'000 g/mol auf, insbesondere 200 bis 2'000 g/mol.

Insbesondere sind auch Polyesterpolyole geeignet, die auch anteilig aromatische Strukturen enthalten, beispielsweise aromatische Carbonsäuren.

Weitere Beispiele für geeignete Prepolymere sind solche auf Basis von Polyetherpolyolen. Diese sind bevorzugt und werden beispielsweise hergestellt durch Umsetzung von Polyetherpolyolen mit Diisocyanaten im stöchiometrischen Überschuss.

Geeignete Polyetherpolyole sind beispielsweise Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, Hexandiolen, 2,2-Dimethyl-1,3-propandiol, 2-Methylpropandiol, 1,6-Hexandiol oder aromatischen Diolen. Ferner können auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet sein. Weitere, im Rahmen der Erfindung geeignete Polyole, entstehen durch Polymerisation von Tetrahydrofuran (Polytetrahydrofuran, PolyTHF). Die Polyetherpolyole werden in dem Fachmann bekannter Weise hergestellt und sind kommerziell erhältlich. Es sollen erfindungsgemäss bevorzugt niedermolekulare Polyether ausgewählt werden, beispielsweise sind Polyetherpolyole mit einem mittleren Molekulargewicht Mₙ von 150 bis 5'000 g/mol, insbesondere bis 3'000, vorzugsweise 200 bis 2'000 g/mol geeignet. Insbesondere sind Diole geeignet, wie Homopolymere des Polyethylenglykols, Propylenglykols, Block- oder statistische Copolymere aus Ethylenglykol und Propylenglykol.

Als Isocyanate zur Herstellung der NCO-haltigen Prepolymere sind die bekannten aliphatischen oder aromatischen Diisocyanate geeignet. Diese haben vorzugsweise ein Molekulargewicht unter 500 g/mol. Als Diisocyanate geeignet sind beispielsweise Ethylendiisocyanat, 1,4-Tetramethylendiisocyanat, 1,4-Tetramethoxybutandiisocyanat, 1,5-Pentamethylendiisocyanat, 1,6-Hexamethylendiisocyanat (HDI), Cyclobutan-1,3-diisocyanat, Cyclohexan-1,3- und - 1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI) oder Isomerengemische des TDI, 2,4' - Diphenylmethandiisocyanat, 2,2' -Diphenylmethandiisocyanat oder 4,4' - Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate.

Es können auch asymmetrische Isocyanate eingesetzt werden, die NCO-Gruppen mit einer unterschiedlichen Reaktivität gegenüber Diolen besitzen. Beispiele für geeignete cycloaliphatische asymmetrische Diisocyanate sind z.B. 1-Isocyanatomethyl-3-isocyanato-1 ,5,5-trimethyl-cyclohexan (Isophorondiisocyanat, IPDI), 1 - Methyl-2,4-diisocyanato-cyclohexan, 1,4-Diisocyanato-2,2,6-trimethylcyclohexan (TMCDI), oder Hydrierungsprodukte der vorgenannten aromatischen Diisocyanate, beispielsweise hydriertes MDI in isomerenreiner Form, bevorzugt hydriertes 2,4'-MDI. Beispiele für bevorzugt geeignete aromatische asymmetrische Diisocyanate sind 1,3-Phenylendiisocyanat, 2,4- Toluylendiisocyanats (TDI), entweder in isomerenreiner Form oder als Mischung mehrerer Isomere, Naphthalin-1,5-diisocyanat (NDI), Diphenylmethan-2,4'-diisocyanat (MDI) sowie Mischungen des 4,4'-Diphenylmethandiisocyanats mit dem 2,4'-MDI-Isomeren. Bevorzugt sollen aromatische Diisocyanate eingesetzt, insbesondere 4,4'-MDI.

Eine Ausführungsform setzt asymmetrische Isocyanate ein. Eine bevorzugte Ausführungsform setzt die Polyole einzeln oder als Mischung mit einem Überschuss an symmetrischen Diisocyanaten um.

Die Mengen an Polyol und Diisocyanat werden in jedem Fall so gewählt, dass eine NCO-terminiertes Prepolymer erhalten wird.

Das Prepolymer wird erhalten aus der Umsetzung von mindestens einem monomeren Diisocyanat und mindestens einem Polyol mit einem Überschuss an Isocyanatgruppen, insbesondere in einem NCO/OH-Verhältnis von mehr als 2/1, bevorzugt mindestens 3/1.

Bevorzugt liegt das NCO/OH-Verhältnis im Bereich von 3/1 bis 10/1, besonders bevorzugt im Bereich von 3/1 bis 8/1, insbesondere im Bereich von 4/1 bis 7/1. Ein höheres NCO/OH-Verhältnis führt zu Prepolymeren höherer Qualität, da weniger Kettenverlängerung und eine niedrigere Polydispersität erreicht werden.

Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Durch das gewählte Verhältnis von Polyol und Diisocyanat hinsichtlich des NCO/OH-Verhältnisses kann erreicht werden, dass kein wesentlicher Molekulargewichtsaufbau (Kettenverlängerung) der Prepolymere erhalten wird. Die resultierenden Prepolymere sollen, falls sie auf Diolen beruhen, zwischen statistisch 1 ,7 bis 2,3 NCO-Gruppen enthalten, insbesondere zwei NCO-Gruppen pro Molekülkette.

Nach der Umsetzung wird das im Reaktiongemisch verbleibende monomere Diisocyanat bevorzugt bis auf den gewünschten Restgehalt mittels eines geeigneten Trennverfahrens entfernt.

Als Trennverfahren bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere Diisocyanat in einem Kurzwegverdampfer bei einer Manteltemperatur im Bereich von 120 bis 200°C und einem Druck von 0.001 bis 0.5 mbar entfernt wird.

Im Fall des als monomeres aromatisches Diisocyanat bevorzugten 4,4'-MDI ist das destillative Entfernen besonders anspruchsvoll. Es muss beispielsweise darauf geachtet werden, dass das Kondensat nicht fest wird und die Anlage verstopft. Bevorzugt wird bei einer Manteltemperatur im Bereich von 160 bis 200°C bei 0.001 bis 0.5 mbar gefahren und das entfernte Monomer bei einer Temperatur im Bereich von 40 bis 60°C kondensiert.

Bevorzugt erfolgt die Umsetzung des monomeren Diisocyanats mit dem Polyol und das anschliessende Entfernen des Grossteils des im Reaktiongemisch verbliebenen monomeren Diisocyanats ohne den Einsatz von Lösemitteln bzw. Schleppmitteln.

Bevorzugt wird das nach der Umsetzung entfernte monomere Diisocyanat anschliessend wiederverwendet, d.h. erneut für die Herstellung von Isocyanatgruppen-haltigem Prepolymer eingesetzt.

Das so hergestellte Prepolymer weist bevorzugt eine Viskosität bei 20°C von höchstens 50 Pa s, insbesondere höchstens 40 Pa s, besonders bevorzugt höchstens 30 Pa s. Dabei wird die Viskosität bestimmt mit einem Kegel-Platten-Viskosimeter mit einem Kegeldurchmesser 25 mm, Kegelwinkel 1°, Kegelspitze-Platten-Abstand 0.05 mm bei einer Scherrate von 10 s⁻¹.

Die Reaktion der monomeren Diisocyanate mit den Polyolen kann jedoch auch *in situ*, das heisst während der Formulierung, beispielsweise in der Druckdose, stattfinden. Dazu wird das Polyol vorgelegt und das Diisocyanat hinzudosiert, wobei, insbesondere in Anwesenheit eines Katalysators, das Prepolymer gebildet wird. Dies kann bei Raumtemperatur oder unter geeigneter, leichter Erwärmung stattfinden.

Der Gehalt an Prepolymer in der erfindungsgemässen Zusammensetzung liegt insbesondere zwischen 60 und 80 Gew.-%, bevorzugt zwischen 65 und 75 Gew.-%, bezogen auf die gesamte Zusammensetzung.

Auch in Fällen, in denen die Zusammensetzung Prepolymere einsetzt, die eine geringere Menge an monomeren Isocyanaten aufweisen, kann es zweckmässig sein, zusätzlich nicht flüchtige oligomere Isocyanat-Derivate zuzusetzen. Dabei kann es sich beispielsweise um aliphatische oder aromatische Isocyanurate, Allophanate und Biurete handeln. Auch polymere aromatische Isocyanate, wie p-MDI können eingesetzt werden. Bevorzugt für die Auswahl dieser oligomeren Isocyanatderivate ist es, dass es sich um solche Substanze handelt, die bei Raumtemperatur nur einen niedrigen Dampfdruck aufweisen, beispielsweise unter 0,005 mbar bei 25°C. Diese Substanzen sind also bevorzugt im Wesentlichen frei von monomeren Diisocyanaten.

Weiterhin soll die erfindungsgemässe Zusammensetzung als Schaumvorläufer auch im Gebiet der Polyurethanschäume bekannte Additive enthalten. Solche Additive sind in der erfindungsgemässen Zusammensetzung bevorzugt in einer Menge von 1 bis 20 Gew.-%, bevorzugt 2 bis 10 Gew.-%, bezogen auf die gesamte Zusammensetzung, enthalten. Es kann sich dabei beispielsweise um Weichmacher, Stabilisatoren, Haftvermittler, Farbstoffe, Duftstoffe, nicht reaktive Polymere, Katalysatoren, Flammschutzmittel, Biozide, Zellöffner und ähnliche Zusatzstoffe handeln, wobei Zellöffner und Schaumstabilisatoren erfindungsgemäss enthalten sein müssen. Dabei ist es zweckmässig den Anteil von nicht im Polymer anreagierten Bestandteilen, wie Weichmacher oder Flammschutzmittel möglichst gering zu halten. Flüchtige Bestandteile, insbesondere Lösemittel, sollen möglichst nicht eingesetzt werden.

Weichmacher können in dem Schaumvorläufer bis zu 30 Gew.-% enthalten sein, bezogen auf die Gesamtzusammensetzung, bevorzugt unter 5 Gew.-%, insbesondere auch keine Weichmacher.

Eine erfindungsgemässe Zusammensetzung kann zusätzlich zu den reaktiven Prepolymeren bis zu 25 Gew.-% von weiteren, nicht-reaktiven Polymeren enthalten. Es handelt sich dabei bevorzugt um feste Polymere, die keine mit Isocyanatgruppen vernetzbaren funktionellen Gruppen aufweisen. Sie sollen homogen mit den Prepolymeren mischbar sein. Mit diesen zusätzlichen Polymeren können Eigenschaften des vernetzten Schaummaterials, wie Härte, Elastizität, Feuchtigkeitsaufnahme, etc. beeinflusst werden. Geeignete solche Polymere sind beispielsweise Poly(meth)acrylate, nicht-reaktive Polyurethane, Vinylacetatcopolymere, Polyester oder aromatische Blockcopolymere.

Unter dem Begriff «Stabilisatoren» sind im Sinne dieser Erfindung insbesondere Antioxidantien, UV-Stabilisatoren, Hydrolyse-Stabilisatoren oder Schaumstabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Ferner können auch Benzotriazole, Benzophenone, Benzoate, Cyanacrylate, Acrylate oder sterisch gehinderte Phenole zugegeben werden.

Die erfindungsgemässe Zusammensetzung enthält mindestens einen Zellöffner, in einer Menge von zwischen 0.05 und 2.0 Gew.-%, bevorzugt zwischen 0.06 und 1.0 Gew.-%, insbesondere zwischen 0.07 und 0.5 Gew.-%, bezogen auf die gesamte Zusammensetzung.

Der Zellöffner ist ein wesentlicher Bestandteil, der zusammen mit dem ebenfalls enthaltenen Schaumstabilisator zum erfindungsgemässen Effekt der Flammhemmung beiträgt.

Geeignete und bevorzugte Zellöffner sind ausgewählt aus ungesättigten Polyolefinölen, insbesondere Polybutadienen, Paraffinölen, Silikonölen, sowie beliebigen Mischungen davon. Besonders bevorzugt sind Silikonöle als Zellöffner, wie beispielsweise Tegiloxan^{®} 100.

Die erfindungsgemässe Zusammensetzung enthält weiterhin mindestens einen Schaumstabilisator, in einer Menge von zwischen 0.5 und 5 Gew.-%, bevorzugt zwischen 1.0 und 3.5 Gew.-%, insbesondere zwischen 1.4 und 3.4 Gew.-%, bezogen auf die gesamte Zusammensetzung.

Beispiele für geeignete Schaumstabilisatoren sind Polyethersiloxane, wie Copolymerisate aus Ethylenoxid und Propylenoxid verbunden mit einem Polydimethylsiloxanrest, über Allophanatgruppen verzweigte Polysiloxan-Polyoxyalkylen-Copolymere, andere Organospolysiloxane, wie Dimethylpolysiloxane, oxyethylierte Alkylphenole, oxyethylierte Fettalkohole, und/oder Paraffinöle. Zur Verbesserung der Emulgierwirkung, der Zellstruktur und/oder zu deren Stabilisierung eignen sich ferner oligomere Polyacrylate mit Polyoxyalkylen- und/oder Fluoralkanresten als Seitengruppen. Bevorzugt können auch Mischungen von Schaumstabilisatoren eingesetzt werden.

Bevorzugt als Schaumstabilisatoren sind Silikonpolymere mit Polyetherseitenketten, insbesondere ein Polydimethylsiloxan-Polyether-Pfropfcopolymere. Solche sind beispielsweise unter dem Handelsnamen Tegostab^{®} von Evonik erhältlich, insbesondere Tegostab^{®} 8870 und Tegostab^{®} B 8871.

Bevorzugt liegt das Gewichtsverhältnis aller enthaltenen Zellöffner zu allen enthaltenen Schaumstabilisatoren in der Zusammensetzung zwischen 0.015:1 und 0.3:1, bevorzugt zwischen 0.02:1 und 0.25:1, insbesondere zwischen 0.03:1 und 0.2:1. Das bedeutet, dass pro Gramm Schaumstabilisatoren in der Zusammensetzung bevorzugt zwischen 0.015 und 0.3 Gramm Zellöffner in der Zusammensetzung enthalten sind, bevorzugt zwischen 0.02 und 0.25 Gramm, insbesondere zwischen 0.03 und 0.2 Gramm. Dieses Verhältnis von Zellöffner zu Schaumstabilisator führt zu besonders guter flammhemmender Wirkung.

Eine besonders bevorzugte Ausführungsform der erfindungsgemässen Zusammensetzung enthält:
a) zwischen 0.05 und 0.3 Gew.-%, bevorzugt zwischen 0.1 und 0.2 Gew.-%, mindestens eines Zellöffners,
b) zwischen 0.5 und 2.5 Gew.-%, bevorzugt zwischen 1.2 und 2.0 Gew.-%, mindestens eines Schaumstabilisators,
c) sowie weniger als 1.0 Gew.-%, bevorzugt weniger als 0.1 Gew.-%, halogenierte und/oder Phosphatester-basierte Flammschutzmittel,
wobei das Gewichtsverhältnis aller enthaltenen Zellöffner zu allen enthaltenen Schaumstabilisatoren in der Zusammensetzung insbesondere zwischen 0.05:1 und 0.15:1 liegt.

Diese Ausführungsform ist besonders EHS-freundlich.

Eine andere besonders bevorzugte Ausführungsform der erfindungsgemässen Zusammensetzung enthält:
a) zwischen 0.05 und 0.3 Gew.-%, bevorzugt zwischen 0.1 und 0.2 Gew.-%, mindestens eines Zellöffners,
b) zwischen 0.5 und 2.5 Gew.-%, bevorzugt zwischen 1.2 und 2.0 Gew.-%, mindestens eines Schaumstabilisators,
c) sowie zwischen 2.0 und 4.0 Gew.-%, bevorzugt zwischen 2.5 Gew.-% und 3.5 Gew.-% halogenierte und/oder Phosphatester-basierte Flammschutzmittel,
wobei das Gewichtsverhältnis aller enthaltenen Zellöffner zu allen enthaltenen Schaumstabilisatoren in der Zusammensetzung insbesondere zwischen 0.05:1 und 0.15:1 liegt.

Diese Ausführungsform ist besonders flammhemmend.

Bei Bedarf können als Haftvermittler vorzugsweise organofunktionelle Silane wie hydroxyfunktionelle, (meth)acryloxyfunktionelle, mercaptofunktionelle, aminofunktionelle oder epoxyfunktionelle Silane verwendet werden. Die Mengen können von 0 bis 10 Gew.-% betragen, vorzugsweise zwischen 0.5 und 5 Gew.-%, bezogen auf die gesamte Zusammensetzung.

Die erfindungsgemässe Zusammensetzung enthält bevorzugt mindestens einen Katalysator. Als Katalysatoren können alle bekannten Verbindungen eingesetzt werden, die Isocyanatreaktionen katalysieren können. Beispiele hierfür sind Titanate wie Tetrabutyltitanat und Tetrapropyltitanat, Zinncarboxylate wie Dibutylzinndilaulat (DBTL), Dibutylzinndiacetat und Zinnoctoat, Zinnoxide wie Dibutylzinnoxid, und Dioctylzinnoxid, Organoaluminumverbindungen wie Aluminumtrisacetylacetonat und Aluminumtrisethylacetoacetat, Chelatverbindungen wie Titantetraacetylacetonat, Aminverbindungen wie Triethylenediamin, Guanidine, Diphenylguanidin, 2,4,6-tris(dimethylaminomethyl)phenol, Morpholin, N-methylmorpholin, 2-Ethyl-4-methyl imidazole, und 1,8-Diazabicyclo-(5,4,0)-undecen-7 (DBU), 1,4-Diazabicyclo[2,2,2]octan, N,N-Dimethylpiperazin, 1 ,8-Diazabicyclo[5.4.0]undec-7-en, Dimorpholinodimethylether, Dimorpholinodiethylether (DMDEE) oder deren Mischungen. Die Katalysatoren werden vorzugsweise in einer Menge von 0.01 bis etwa 5 Gew.-% bezogen auf das Gesamtgewicht der Zusammensetzung eingesetzt.

In bevorzugten Ausführungsformen enthält die erfindungsgemässe Zusammensetzung mindestens ein Katalysator in einer Menge zwischen 0.1 und 5 Gew.-%, bezogen auf die gesamte Zusammensetzung, bevorzugt 2,2'-Dimorpholinodiethylether.

Die erfindungsgemässe schäumbare Zusammensetzung kann auch mindestens ein, insbesondere flüssiges, Flammschutzmittel enthalten, wobei jedoch weniger als 5 Gew.-%, bevorzugt weniger als 3.5 Gew.-%, halogenierte und/oder Phosphatester-basierte Flammschutzmittel enthalten sein müssen.

Das Flammschutzmittel kann beispielsweise ausgewählt werden aus der Gruppe halogenierte (insbesondere bromierte) Ether oder Ester, organische Phosphate, insbesondere Diethylethanphosphonat, Triethylphosphat, Dimethylpropylphosphonat, Diphenylkresylphosphat, sowie chlorierte Phosphate, insbesondere Trismonochlorpropylphosphat, Tris(2-chlorethyl)phosphat, Tris-(2-chlorisopropyl)phosphat, Tris(1,3-dichlorisopropyl)- phosphat, Tris-(2,3-dibrompropyl)phosphat und Tetrakis-(2-chlorethyl)- ethylendiphosphat oder deren Mischungen.

Eine bevorzugte Ausführungsform wählt solche Flammschutzmittel aus, die keine Hydroxylgruppen aufweisen, da diese den Gehalt an reaktiven NCO-Gruppen vermindern können. Vorzugsweise enthält die Mischung das Flammschutzmittel in einer Menge von unter 4 Gew.-%, bevorzugt weniger als 3.5 Gew.-%.

In einigen bevorzugten Ausführungsformen enthält die Zusammensetzung ein organischer Phosphatester, insbesondere Tris(2-chlorisopropyl)phosphat (TCPP) als Viskositätsregulierer und Flammhemmer, bevorzugt in einer Menge von zwischen 5 und 15 Gew.-%, bezogen auf die gesamte Zusammensetzung.

In anderen bevorzugten Ausführungsformen enthält die Zusammensetzung weniger als 1 Gew.-%, insbesondere weniger als 0.5 Gew.-%, bevorzugt weniger als 0.1 Gew.-%, am meisten bevorzugt gar keine halogenierten und/oder Phosphatester-basierten Flammschutzmittel.

Eine erfindungsgemässe schäumbare Zusammensetzung enthält neben dem Gemisch der Prepolymere und Additive mindestens ein Treibmittel. Das Treibmittel ist bevorzugt in einer Menge von 10 bis 50 Gew.-%, bezogen auf die gesamte Zusammensetzung, enthalten.

Als Treibmittel können prinzipiell eine Vielzahl leichtflüchtiger Verbindungen eingesetzt werden, die bei Anwendungstemperatur, beispielsweise bei 20°C, flüchtig sind und verdampfen können. Treibmittel werden vorzugsweise ausgewählt aus Kohlenwasserstoffen und/oder Fluorkohlenwasserstoffen mit jeweils 1-5 Kohlenstoffatomen und/oder Ether mit einem Molekulargewicht unter 120 g/mol, wie Dimethylether (DME), Diethylether, Dimethoxymethan, Dimethoxyethan sowie deren Mischungen, beispielsweise eine Mischung aus DME / Propan / Isobutan / n-Butan.

In einer besonderen Ausführungsform ist es zweckmässig, dass mindestens anteilsweise polare Treibmittel enthalten sind. Gegebenenfalls können zusätzlich unpolare Treibmittel eingesetzt werden. Als unpolare Treibmittel werden die bekannten leichtflüchtigen Kohlenwasserstoffe verstanden, die 1 bis 5 Kohlenstoffatome aufweisen. Als polare Treibmittel werden solche Substanzen verstanden, die bei 20°C einen erheblichen Dampfdruck aufweisen und eine dem chemisch gebildeten Fachmann bekannte Polarität zeigen. Es handelt sich dabei um Verbindungen, die zusätzlich zu Kohlenwasserstoffeinheiten weitere Heteroatome aufweisen, insbesondere Sauerstoff, Fluor oder Chlor. Beispiele für solche Verbindungen sind Dimethylether (DME), Diethylether, Dimethoxymethan, Dimethoxyethan, 1,1-Difluorethan (R152a) oder 1,1,1,2-Tetrafluorethan (R134a). Solche polaren Treibmittel können einzeln oder im Gemisch enthalten sein.

Die Treibmittel werden bevorzugt in Mengen von 10 bis 40 Gew.%, vorzugsweise 15 und 35 Gew.-%, bevorzugt zwischen 20 und 30 Gew.-%, bezogen auf die gesamte schäumbare Mischung eingesetzt.

Insbesondere kann ein hoher Anteil an polaren Treibmitteln in vorteilhafter Weise eingesetzt werden, beispielsweise sind bevorzugt mehr als 25 % bezogen auf die Menge der Treibmittel polare Treibmittel enthalten sein, insbesondere mehr als 50 %. Ganz besonders bevorzugt sind DME und/oder Dimethoxymethan als polares Treibmittel.

In besonders bevorzugten Ausführungsformen ist das Treibmittel ausgewählt aus Dimethylether, Diethylether, Dimethoxymethan, Propan, Butan, Isobutan und aus beliebigen Mischungen dieser Treibmittel, wobei bevorzugt Dimethylether enthalten ist in einer Menge von mindestens 50 Gew.-% bezogen auf alle in der Zusammensetzung enthaltenen Treibmittel.

Einige besonders bevorzugte Ausführungsformen der erfindungsgemässen schäumbaren Zusammensetzung enthalten 60 bis 80 Gew.-%, bevorzugt 65 bis 75 Gew.-% Prepolymere, 0.05 bis 0.5 Gew.-%, bevorzugt 0.08 bis 0.3 Gew.-% Zellöffner, 1.0 bis 5.0 Gew.-%, bevorzugt 1.5 bis 3.5 Gew.-% Schaumstabilisatoren, 0.5 bis 2.0 Gew.-%, bevorzugt 1 bis 1.5 Gew.-% Katalysatoren, sowie 15 bis 35 Gew.-%, bevorzugt 20 bis 30 Gew.-% Treibmittel.

In denselben weiteren bevorzugten Ausführungformen enthält die Zusammensetzung weniger als 0.1 Gew.-% monomere Diisocyanate, bezogen auf die gesamte Zusammensetzung. Eine solche Zusammensetzung ist besonders vorteilhaft bezüglich Arbeitssicherheit und Anwenderfreundlichkeit.

Durch den gleichzeitigen Einsatz von Zellöffnern und Schaumstabilisatoren in den beanspruchten Mengen weist eine erfindungsgemässe aufgeschäumte Zusammensetzung nach der Vernetzung unerwartet gute flammhemmende Eigenschaften auf, obwohl auf den Einsatz von halogenierten und/oder Phosphatester-basierten Flammschutzmittel weitgehend oder komplett verzichtet wird. Damit zeigen erfindungsgemässe ausgeschäumte und ausgehärtete Zusammensetzungen in höchst überraschender Weise eine bis anhin unbekannt hohe Flammhemmung bei gleichzeitig EHS-freundlicher und kostengünstiger Formulierung.

Ein weiterer Gegenstand der Erfindung ist ein Verfahren zum Herstellen der erfindungsgemässen schäumbaren, vernetzbaren Zusammensetzungen. Gemäss einer Ausführungsform von diesem Verfahren wird ein Prepolymer durch die Umsetzung mindestens eines Polyols mit einem molaren Überschuss an monomeren Diisocyanaten hergestellt. Dabei soll dieser Überschuss bevorzugt ein NCO/OH-Verhältnis von mehr als 2/1 umfassen. Nach der Reaktion wird in bevorzugten Ausführungsformen das nicht reagierte monomere Diisocyanat entefernt, insbesondere abdestilliert, auf einen Gehalt von weniger als 0.5 Gew.-% bezogen auf das Prepolymer, bevorzugt weniger als 0.3 Gew.-%, insbesondere unter 0.2 Gew.-%. In einer besonderen Ausführungsform ist das Prepolymer praktisch frei von monomeren Isocyanaten, d.h. enthält weniger als 0.1 Gew-%. Dabei ist es möglich, das abdestillierte Diisocyanat wieder bei der Synthese der Prepolymere einzusetzen. Bei den besonders geeigneten Isocyanaten für das Verfahren handelt es sich um aromatische Isocyanate, wie 2,4'- oder 4,4'-MDI oder Gemische. Nach der Verminderung der Monomere kann das Prepolymer zusammen mit den weiteren Additiven in die Verpackung abgefüllt und gemischt werden.

Gemäss einer anderen Ausführungsform von diesem Verfahren wird das Prepolymer in der Zusammensetzung *in situ* nach Zugabe von mindestens einem Polyol und einem Überschuss mindestens eines Polyisocyanats gebildet. Diese Herstellung kann direkt im Gebinde, also z.B. der Druckdose, stattfinden.

Danach werden alle weiteren Additive wie Zellöffner und Schaubstabilisatoren zugegeben.

Weiterhin wird zu dieser Mischung mindestens ein Treibgas zugesetzt. Bevorzugt wird eine Mischung von polaren und unpolaren Treibgasen eingesetzt. Das kann durch Mischen der Prepolymer/Additivmischung mit Treibgas geschehen, wobei diese Mischung dann in die entsprechenden Einweg-Druckgebinde abgefüllt wird. Es ist ebenso möglich, die Prepolymere und Additive einzeln in den entsprechenden Behälter zu geben und die Treibgase danach zuzusetzen. Auf bekannte Art und Weise werden die Komponenten miteinander vermischt. Das Mischen der Komponenten kann auch durch Erwärmen unterstützt werden, so dass die Verarbeitungsprozesse schneller ablaufen.

Ein weiterer Gegenstand der vorliegenden Erfindung ist ein Einkomponenten-Aersoldruckdose (Einweg-Druckbehälter) enthaltend eine erfindungsgemässe schäumbare Zusammensetzung.

Um eine gute Verarbeitbarkeit der Mischung - insbesondere das Befüllen der Behälter - zu ermöglichen, liegt die Viskosität der Mischung mit den nicht flüchtigen Bestandteilen (Zusammensetzung ohne Treibmittel) bevorzugt im Bereich von 3'000 bis 150'000 mPas (gemessen bei 50°C). Die Mischungen, abgefüllt in Einweg-Druckbehältern sind über einen Zeitraum von mindestens 6 Monate lagerstabil, soweit unter wasserfreien Bedingungen gearbeitet wird. Die erfindungsgemässe Zusammensetzung weist eine Viskosität auf, die eine gute und leichte Applikation in Form einer Sprühapplikation aus einer Druckdose ermöglicht. Die aufgetragene Zusammensetzung schäumt auf. Die erfindungsgemässen schäumbaren Zusammensetzungen härten nach dem Ausbringen aus der Aerosoldose durch Reaktion mit der umgebenden Luftfeuchtigkeit zu feinzelligen Schäumen aus, so dass die Zusammensetzungen zum Dichten, Dämmen und/oder Montieren, z.B. von Fugen, Dachflächen, Fenstern und Türen oder zum Ausfüllen von Hohlräumen geeignet sind.

Ein weiterer Gegenstand der vorliegenden Erfindung ist daher auch die Verwendung der erfindungsgemässen Zusammensetzung als Montageschaum mit flammhemmenden Eigenschaften zum Ausschäumen von Hohlräumen, insbesondere zur Schalldämmung und/oder Wärmeisolierung in Gebäuden und/oder Fahrzeugen, oder als Schaumkleberzusammensetzung mit flammhemmenden Eigenschaften zum Verkleben von Werkstoffen im Baubereich.

Die erfindungsgemässen schäumbaren Zusammensetzungen sind insbesondere zur Verwendung als Einkomponenten-Dosenschaum einzusetzen. Diese werden üblicherweise als Montage- oder Bauschaum eingesetzt, d.h. sie werden zur Herstellung und Lagerung und Transport in Aerosoldosen gefüllt und unmittelbar bei der Anwendung ausgetragen und aufgeschäumt. Durch die erfindungsgemässe Zusammensetzung ist es möglich, Isocyanat-reaktive Polyurethanschäume herzustellen, die einen geringen Anteil an halogenierten und/oder Phosphatester-basierten Flammschutzmittel oder gar keine solchen Additive enthalten, und in bevorzugten Ausführungsformen einen niedrigen Monomergehalt aufweisen, und dabei gute flammhemmende Eigenschaften besitzen.

Die erfindungsgemässen Zusammensetzungen zeigen eine ausreichende Viskosität, um mit den bekannten Treibmitteln verschäumbar zu sein. Die erfindungsgemässen schäumbaren Zusammensetzungen härten mit der vorhandenen Luftfeuchtigkeit aus und ergeben kleinzellige, mechanisch stabile Schäume. Durch den niedrigen Gehalt a halogenierten und/oder Phosphatester-basierten Flammschutzmitteln, und in bevorzugten Ausführungsformen an monomeren Isocyanaten, werden erhöhte Anforderungen in Bezug auf Umweltschutz, Arbeitssicherheit und Gesundheitsschutz erfüllt. Die technischen Anwendungseigenschaften der geschäumten Materialien sind im Vergleich zu bekannten Stand der Technik mindestens gleichwertig.

### Beispiele

Im Folgenden sind Ausführungsbeispiele aufgeführt, welche die beschriebene Erfindung näher erläutern sollen.

Die verwendeten Chemikalien waren, sofern nicht anders bezeichnet, von Sigma-Aldrich Chemie GmbH.

### Beschreibung der Messmethoden:

Der **Gehalt an monomerem Diisocyanat** wurde mittels HPLC (Detektion über Photodiodenarray; 0.04 M Natriumacetat / Acetonitril als mobile Phase) nach vorgäniger Derivatisierung mittels N-Propyl-4-nitrobenzylamin bestimmt.

Die **Flammhöhe** als Mass der flammhemmenden Eigenschaften wurde nach DIN 4102-1 bestimmt. Dabei gelten Flammhöhen bis 150 mm als akzeptabel. Je geringer die Flammhöhe, desto besser die flammhemmenden Eigenschaften.

### Herstellung von Isocyanatgruppen-haltigen Prepolymeren:

### Prepolymer P-1:

Ein Propylenglykol-gestartetes Polyoxypropylendiol mit einem mittleren Molekulargewicht von 431 g/mol (Voranol^{®} P 400, OH-Zahl 260 mg KOH/g, von Dow) wurde mit 4,4'-Diphenylmethandiisocyanat (Desmodur^{®} 44 MC L, von Covestro) mit einem NCO/OH-Verhältnis von 4/1 bei 80 °C nach bekanntem Verfahren zu einem NCO-terminierten Prepolymer umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar, Kondensationstemperatur 47°C), wobei ein Prepolymer mit einem Gehalt an monomerem 4,4'-Diphenylmethandiisocyanat von 0.04 Gewichts-% erhalten wurde.

### Herstellung der Beispielzusammensetzungen als Einkomponenten-Dosenschaum

Zum vorgelegten Prepolymer (Prepolymer P-1) und gegebenenfalls Trismonochlorpropylphosphat (TCPP) wurden in jedem Versuch 2,2'-Dimorpholinodiethylether (DMDEE) (Jeffcat^{®} DMDLS) als Katalysator zugesetzt sowie, je nach Versuch, Zellöffner (Tegiloxan^{®} 100) und Schaumstabilisatoren (Tegostab^{®} 8870, sowie Tegostab^{®} B 8871). Anschliessend wurden zu dieser Mischung eine Treibmittelmischung aus Propan i-Butan (2:1) und Dimethylether zugefügt. Das Abfüllen in die Druckdosen erfolgt bei erhöhter Temperatur.

Die genauen Mengen der Bestandteile in jedem Beispielversuch sind in Tabellen 1 und 2 angegeben.

**Tabelle 1: Beispielzusammensetzungen S1 bis S6 (alle Bestandteilmengen sind in Gewichtsteilen) sowie Messresultate der Flammhöhe nach DIN 4102-1. * nicht erfindungsgemässes Beispiel (Referenz).**

| **Beispiel** | **S1** | **S2 *** | **S3 *** | **S4 *** | **S5 *** | **S6 *** |
|---|---|---|---|---|---|---|
| TCPP | 0 | 0 | 0 | 0 | 0 | 15 |
| Prepolymer P-1 | 330 | 335 | 335 | 310 | 300 | 330 |
| DMDEE | 5.0 | 5.0 | 5.0 | 5.0 | 5.0 | 5.0 |
| Tegostab^{®} 8870 | 4.0 | 4.0 | 4.0 | 4.0 | 4.0 | 4.0 |
| Tegiloxan^{®} 100 | 0.8 | 0 | 0 | 0 | 0 | 0 |
| Tegostab^{®} B 8871 | 5.0 | 3.0 | 5.0 | 5.0 | 5.0 | 12.0 |
| Propan/i-Butan (1:2) | 54 | 63 | 63 | 60 | 68 | 54 |
| Dimethylether | 64 | 60 | 80 | 90 | 77 | 64 |
| | | | | | | |
| Flammhöhe [mm] | < 100 | > 200 | > 200 | > 200 | > 200 | > 200 |

**Tabelle 2: Beispielzusammensetzungen S7 bis S12 (alle Bestandteilmengen sind in Gewichtsteilen) sowie Messresultate der Flammhöhe nach DIN 4102-1.**

| **Beispiel** | **S7** | **S8** | **S9** | **S10** | **S11** | **S12** |
|---|---|---|---|---|---|---|
| TCPP | 15 | 15 | 15 | 15 | 15 | 15 |
| Prepolymer P-1 | 330 | 310 | 330 | 330 | 330 | 330 |
| DMDEE | 5.0 | 5.0 | 5.0 | 5.0 | 5.0 | 5.0 |
| Tegostab^{®} 8870 | 8.0 | 8.0 | 4.0 | 4.0 | 10.0 | 4.0 |
| Tegiloxan^{®} 100 | 1.2 | 1.2 | 0.8 | 0.4 | 0.8 | 0.8 |
| Tegostab^{®} B 8871 | 0 | 0 | 5.0 | 5.0 | 5.0 | 12.0 |
| Propan/i-Butan (1:2) | 54 | 60 | 54 | 54 | 54 | 54 |
| Dimethylether | 64 | 72 | 64 | 64 | 64 | 64 |
| | | | | | | |
| Flammhöhe [mm] | < 100 | < 100 | << 100 | ca. 130 | ca. 120 | ca. 110 |

Die Resultate zur Flammhöhe (Tabellen 1 und 2) zeigen in überraschender Weise, dass die erfindungsgemässen Zusammensetzungen eine deutlich niedrigere Flammhöhe und damit bessere flammhemmende Eigenschaften aufweisen als die nicht erfindungsgemässen Referenzzusammensetzungen. Insbesondere Beispiel S1, welches keine halogenierten und/oder Phosphatester-basierten Flammschutzmittel enthält, zeigt eine im Vergleich mit Referenzbeispiel S6 deutlich verbesserte Flammhemmung auf. Dies ist insofern überraschend, als S6 TCPP enthält, ein halogenierter Phosphatester. Der flammhemmende Effekt in S1 wird durch die Kombination mit Zellöffner und Schaumstabilisatoren wie in Anspruch 1 definiert, erzeugt.

Beispiele S7 bis S12 zeigen verschiedene weitere Ausführungsformen mit teilweise noch weiter verbesserten flammhemmenden Eigenschaften (S9).

## Patentansprüche

1. Vernetzbare schäumbare Polyurethanzusammensetzung geeignet zur Verwendung als Polyurethanschaum mit flammhemmenden Eigenschaften, enthaltend:
- mindestens ein Isocyanatgruppen-haltiges Prepolymer,
- mindestens ein Treibmittel,
- sowie Additive ausgewählt aus Schaumstabilisatoren, Katalysatoren, Viskositätsregulierern, Zellöffnern, Flammschutzmitteln, nicht reaktiven Polymeren, Farbstoffen oder Pigmenten, und/oder UV-Stabilisatoren,
**dadurch gekennzeichnet, dass**
die Polyurethanzusammensetzung, jeweils bezogen auf die gesamte Zusammensetzung,
a) zwischen 0.05 und 2.0 Gew.-%, bevorzugt zwischen 0.06 und 1.0 Gew.-%, mindestens eines Zellöffners,
b) zwischen 0.5 und 5 Gew.-%, bevorzugt zwischen 1.0 und 3.5 Gew.-%, mindestens eines Schaumstabilisators,
c) sowie weniger als 5 Gew.-%, bevorzugt weniger als 3.5 Gew.-%, halogenierte und/oder Phosphatester-basierte Flammschutzmittel enthält.

2. Zusammensetzung gemäss Anspruch 1, **dadurch gekennzeichnet, dass** der Zellöffner ausgewählt ist aus ungesättigten Polyolefinölen, insbesondere Polybutadienen, Paraffinölen, Silikonölen, sowie beliebigen Mischungen davon.

3. Zusammensetzung gemäss einem der Ansprüche 1 oder 2, **dadurch gekennzeichnet, dass** der Schaumstabilisator ein Silikonpolymer mit Polyetherseitenketten darstellt, insbesondere ein Polydimethylsiloxan-Polyether-Pfropfcopolymer.

4. Zusammensetzung gemäss einem der Ansprüche 1 bis 3, **dadurch gekennzeichnet, dass** mindestens ein Katalysator in einer Menge zwischen 0.1 und 5 Gew.-%, bezogen auf die gesamte Zusammensetzung, enthalten ist, bevorzugt 2,2'-Dimorpholinodiethylether.

5. Zusammensetzung gemäss einem der Ansprüche 1 bis 4, **dadurch gekennzeichnet, dass** das Prepolymer vorgängig hergestellt wird, aus der Umsetzung mindestens eines Polyether- und/oder Polyester-Polyols und mindestens eines aromatischen Diisocyanats in einem NCO/OH-Verhältnis von > 2/1, insbesondere von zwischen 3/1 und 7/1, und nachfolgender Entfernung von überschüssigem monomerem Diisocyanat, so dass das Prepolymer nach der Entferrnung einen Restmonomergehalt von weniger als 0.5 Gew.-%, bevorzugt weniger als 0.1 Gew.-%, bezogen auf das Prepolymer, aufweist.

6. Zusammensetzung gemäss einem der Ansprüche 1 bis 5, **dadurch gekennzeichnet, dass** die Zusammensetzung weniger als 0.1 Gew.-% monomere Diisocyanate, bezogen auf die gesamte Zusammensetzung, enthält.

7. Zusammensetzung gemäss einem der Ansprüche 1 bis 6, **dadurch gekennzeichnet, dass** der Gehalt an Prepolymer in der Zusammensetzung zwischen 60 und 80 Gew.-%, bevorzugt zwischen 65 und 75 Gew.-%, bezogen auf die gesamte Zusammensetzung, liegt.

8. Zusammensetzung gemäss einem der Ansprüche 1 bis 4 oder 7, **dadurch gekennzeichnet, dass** das Prepolymer in der Zusammensetzung *in situ* nach Zugabe von mindestens einem Polyol und einem Überschuss mindestens eines Polyisocyanats gebildet wird.

9. Zusammensetzung gemäss einem der Ansprüche 1 bis 8, **dadurch gekennzeichnet, dass** das Prepolymer auf Methylendiphenylisocyanat (MDI) beruht, insbesondere Diphenylmethan-4,4'-diisocyanat (4,4'-MDI).

10. Zusammensetzung gemäss einem der Ansprüche 1 bis 9, **dadurch gekennzeichnet, dass** das Gewichtsverhältnis aller enthaltenen Zellöffner zu allen enthaltenen Schaumstabilisatoren in der Zusammensetzung zwischen 0.04:1 und 0.25:1, bevorzugt zwischen 0.05:1 und 0.20:1, insbesondere zwischen 0.07:1 und 0.15:1, liegt.

11. Zusammensetzung gemäss einem der Ansprüche 1 bis 10, **dadurch gekennzeichnet, dass** das Treibmittel ausgewählt ist aus Dimethylether, Diethylether, Dimethoxymethan, Propan, Butan, Isobutan und aus beliebigen Mischungen dieser Treibmittel, wobei bevorzugt Dimethylether enthalten ist in einer Menge von mindestens 50 Gew.-% bezogen auf alle in der Zusammensetzung enthaltenen Treibmittel.

12. Zusammensetzung gemäss einem der Ansprüche 1 bis 11, **dadurch gekennzeichnet, dass** der Gehalt an Treibmittel in der Zusammensetzung zwischen 15 und 35 Gew.-%, bevorzugt zwischen 20 und 30 Gew.-%, bezogen auf die gesamte Zusammensetzung, liegt.

13. Zusammensetzung gemäss einem der Ansprüche 1 bis 12, **dadurch gekennzeichnet, dass** die Zusammensetzung gänzlich frei ist von halogenierten und/oder Phosphatester-basierten Flammschutzmitteln.

14. Einkomponenten-Aersoldruckdose enthaltend die Zusammensetzung gemäss einem der Ansprüche 1 bis 13.

15. Verwendung der Zusammensetzung gemäss einem der Ansprüche 1 bis 13 als Montageschaum mit flammhemmenden Eigenschaften zum Ausschäumen von Hohlräumen, insbesondere zur Schalldämmung und/oder Wärmeisolierung in Gebäuden und/oder Fahrzeugen, oder als Schaumkleberzusammensetzung mit flammhemmenden Eigenschaften zum Verkleben von Werkstoffen im Baubereich.
